# EUROPEAN PATENT APPLICATION

(11) **EP 2 600 603 A2**
(43) Date of publication of application: **05.06.2013**
(21) Application number: 12191974.0
(22) Date of filing: 09.11.2012
(51) Int. Cl.: H04N 1/04, H04N 1/23

(54) **Image forming apparatus, image forming method and recording medium**

(30) Priority: 01.12.2011 KR 20110128000
(71) Applicant: Samsung Electronics Co., Ltd., Gyeonggi-do 443-742 (KR)
(72) Inventor: Lee, Jae-in, Suwon-si (KR)
(74) Representative: Waddington, Richard

(57) **Abstract**

An image forming method of an image forming apparatus includes receiving a setting of a standard paper group to be applied, sensing a size of paper when the paper is placed in the image forming apparatus, determining that the size of the paper is the standard paper size when the sensed size of the paper is a standard paper size within the set standard paper group, and determining that the sensed size of the paper is a size close to the standard paper size greater than a non-standard paper size when the sensed size of the paper is the non-standard paper size within the set standard paper group, and scanning the paper and printing on paper corresponding to the determined size of the paper.

## Description

### BACKGROUND

### 1. Field

The general inventive concept relates to an image forming apparatus, image forming method and recording medium, more particularly to an image forming apparatus which applies a standard to determine a size of paper differently depending on a standard paper group to be applied, and an image forming method and recording medium thereof.

### 2. Description of the Related Art

An image forming apparatus refers to an apparatus which records print data generated in a terminal such as a computer. A copier, printer, facsimile, and Multi Function Peripheral (MFP) which has functions of a copier, printer, and facsimile in one apparatus are examples of an image forming apparatus.

Recent image forming apparatuses provide a function of automatically sensing a size of paper so that a user may use the apparatus without having to further set a size of the paper.

However, in the case of sensing a size of paper, due to constraint conditions, the problem was that identification of a size of standard paper was unable to be performed unless the paper was within a certain range, and identificataion of a size of non-standard paper was unable to be performed. Accordingly, sensing non-standard paper led to a sensing failure, bringing inconvenience to a user of having to further set the size of paper.

Herein, a standard paper size refers to a size of standard paper such as A3, A4, A5, and Letter, and a non-standard paper size generally refers to a size of paper other than A3, A4, A5, and Letter. Herein for example, the non-standard paper size may be a size of non-standard paper such as paper that a user has cut out from standard paper at his/her discretion.

In a conventional image forming apparatus, as mentioned above, which automatically senses a size of paper, sensing is unable to be performed unless the size of the paper is within the ranges mentioned in the table below.

**[Table 1]**

| Paper that may be sensed | Actual width(mm) | Width ranges of paper that may be sensed(mm) |
|---|---|---|
| Statement | 139.7 | 135.7-143.8 |
| A5 | 148 | 143.9-155 |
| B5 | 182 | 178-188 |
| A5-R | 210 | 206-213 |
| A4 | 210 | 206-212.9 |
| Statement-R | 215.9 | 213∼221.9 |
| Letter | 215.9 | 213∼221.9 |
| Legal | 215.9 | 213∼221.9 |
| B5-R | 257 | 253-263 |
| B4 | 257 | 253-263 |
| Letter-R | 279 | 275-285 |
| Ledger | 279 | 275-285 |
| A4-R | 297 | 293- |
| A3 | 297 | 293- |

That is, in a conventional image forming apparatus which automatically senses a size of paper, simply the paper specifically listed above and the widths within +-4mm margin of error may be sensed. Otherwise paper sensing would be unsuccessful. Thus, when a user frequently uses paper of non-standard sizes, paper sensing often results in a failure, causing inconvenience to a user who must set the size of paper once again.

Moreover, even when the paper is successfully sensed, information with respect to the sensed paper is not provided to the user, requiring the user to check the result of the printing. Thus, there is a need to improve the usability of paper sensing.

### SUMMARY OF THE INVENTION

A feature of the exemplary embodiments relates to an image forming apparatus, an image forming method, and recording medium thereof, which enables convenient use by preventing the need to set a size of paper every time when a paper sensing results in a failure and when automatically sensing the size of paper.

Additional features and utilities of the present general inventive concept will be set forth in part in the description which follows and, in part, will be obvious from the description, and/or may be learned by practice of the general inventive concept.

According to the present invention there is provided an apparatus and method as set forth in the appended claims. Other features of the invention will be apparent from the dependent claims, and the description which follows.

According to an exemplary embodiment of the present general inventive concept, an image forming method of an image forming apparatus includes receiving a setting of a standard paper group to be applied, sensing a size of paper, when the paper is placed in the image forming apparatus, determining that the size of the paper is a first standard paper size when the sensed size of the paper is the first standard paper size within the setting of the standard paper group, and determining that the sensed size of the paper is a size within a predetermined variation of a second standard paper size that is greater than a non-standard paper size when the sensed size of the paper is the non-standard paper size within the setting of the standard paper group, and scanning the paper and printing on paper corresponding to the determined size of the paper.

In addition, the standard paper group may include an AB size paper group and Inch size paper group.

The image forming method may further include displaying the determined size of the paper.

In addition, the sensing the size of the paper may use a scanning sensor and at least one light sensor provided in a scanning unit of the image forming apparatus to sense the size of the paper, when the image forming apparatus is in a Flatbed method.

In addition, the sensing of the size of the paper may utilize at least one sensing sensor provided in a paper feeding unit of the image forming apparatus to sense the size of the paper, when the image forming apparatus is in an ADF (Auto Document Feeder) method.

Moreover, the sensing of the size of the paper may sense the size of the paper when the paper is placed in the image forming apparatus and after a cover is closed and/or when the paper is placed in the image forming apparatus and after a job processing command is input and before the cover is closed.

The determining the size of the paper may determine that the size of paper which may not be sensed is a predetermined standard paper size, when it is impossible to sense the size of the paper.

According to an exemplary embodiment of the present general inventive concept, an image forming apparatus may include a user interface unit which receives a setting of a standard paper group to be applied, a sensing unit which senses a size of the paper when the paper is placed in the image forming apparatus, a control unit which determines that the size of the paper is a first standard paper size when the sensed size of the paper is a first standard paper size within a setting of the standard paper group, and determines that the size of the paper is a size within a predetermined variation of a second standard paper size that is greater than a non-standard paper size when the sensed paper size is the non-standard paper size within the setting of the standard paper group, and a job processing unit which scans the paper and prints on paper corresponding to the determined size of the paper.

The standard paper group may include an AB size paper group and Inch size paper group.

The control unit may control the user interface unit to display the determined size of the paper.

The sensing unit may use a scanning sensor and at least one light sensor provided in a scanning unit of the image forming apparatus to sense the size of the paper, when the image forming apparatus is in a Flatbed method.

In addition, the sensing unit may use at least one sensing sensor provided in a paper feeding unit of the image forming apparatus to sense the size of the paper, when the image forming apparatus is in an ADF (Auto Document Feeder) method.

The sensing unit may sense the size of the paper when the paper is placed in the image forming apparatus and after a cover is closed and/or when the paper is placed in the image forming apparatus and after a job processing command is input and before the cover is closed.

The control unit may determine that the size of paper which may not be sensed is a predetermined standard paper size, when it is impossible to sense the size of the paper.

According to an exemplary embodiment of the present general inventive concept, an image forming apparatus may include an image forming method of an image forming apparatus, the method including sensing a size of a paper, determining, based on a setting of a standard paper group having a plurality of standard paper sizes if the sensed size is a first standard paper size of the plurality of standard paper sizes, that the sensed size is the first standard paper size, or if the sensed size is a non-standard paper size within the setting of the standard paper group, that the sensed size is a second standard paper size that is proximate to, and greater than, the non-standard paper size, and scanning the paper and printing on paper corresponding to the determined size of the paper.

An exemplary embodiment of an image forming apparatus may include a setting determining module to sense a size of a paper and to set one of a first standard paper size if the sensed size is a standard paper size within a predetermined variation of a plurality of standard paper sizes, and a second standard paper size if the sensed size is a nonstandard size proximate to, and greater than, the predetermined variation of the first standard paper size, but less than the second standard paper size, and a scanning module in electrical communication with the setting determining module to scan the paper and print on paper corresponding to the first standard paper size or second standard paper size set by the setting determining module. The first and second standard paper size may be determined by one of a standard paper size determined by a sensed width of the paper, a standard paper size determined by a sensed length of the paper, and a greater of a third standard paper size and a fourth standard paper size when a length of a sensed nonstandard size paper provides the third standard size paper and a width of the nonstandard size paper provides the fourth standard size paper

According to an exemplary embodiment of the present general inventive concept, a recording medium wherein a program code to perform an image forming method in an image forming apparatus is stored may include receiving a setting of a standard paper group to be applied, sensing a size of paper when the paper is placed in the image forming apparatus, determining that the size of the paper is a first standard paper size when the sensed size of the paper is a standard paper size within the set standard paper group, and determining that the sensed size of the paper is a size within a predetermined variation of a second standard paper size that is greater than a non-standard paper size when the sensed size of the paper is the non-standard paper size within the setting of the standard paper group, and scanning the paper and printing on paper corresponding to the determined size of the paper.

### BRIEF DESCRIPTION OF THE DRAWINGS

These and/or other features and utilities of the present general inventive concept will become apparent and more readily appreciated from the following description of the embodiments, taken in conjunction with the accompanying drawings of which:

FIG. 1 is a block diagram illustrating an image forming apparatus according to an exemplary embodiment of the present general inventive concept;

FIGs. 2 to 3 are views illustrating placement areas according to a standard paper group;

FIGs. 4 to 5 are views illustrating a method to determine a size of paper;

FIG. 6 is a view illustrating when sensing a size of paper is impossible;

FIG. 7 is a flowchart illustrating an image forming method according to an exemplary embodiment of the present general inventive concept;

FIG. 8 is a flowchart specifically illustrating an image forming method according to FIG. 7;

FIG. 9 is a flowchart illustrating an image forming method according to an exemplary embodiment of the present general inventive concept; and

FIG. 10 is a block diagram illustrating an image forming apparatus according to an exemplary embodiment of the present general inventive concept.

### DETAILED DESCRIPTION OF THE EXEMPLARY EMBODIMENTS

Reference will now be made in detail to the exemplary embodiments of the present general inventive concept, examples of which are illustrated in the accompanying drawings, wherein like reference numerals refer to the like elements throughout. The exemplary embodiments are described below to explain the present general inventive concept while referring to the figures.

The matters defined in the description, such as detailed construction and elements, are provided to assist in a comprehensive understanding of exemplary embodiments. However, exemplary embodiments may be practiced without those specifically defined matters. Also, well-known functions and/or constructions are not described in detail since they would obscure the application with unnecessary detail.

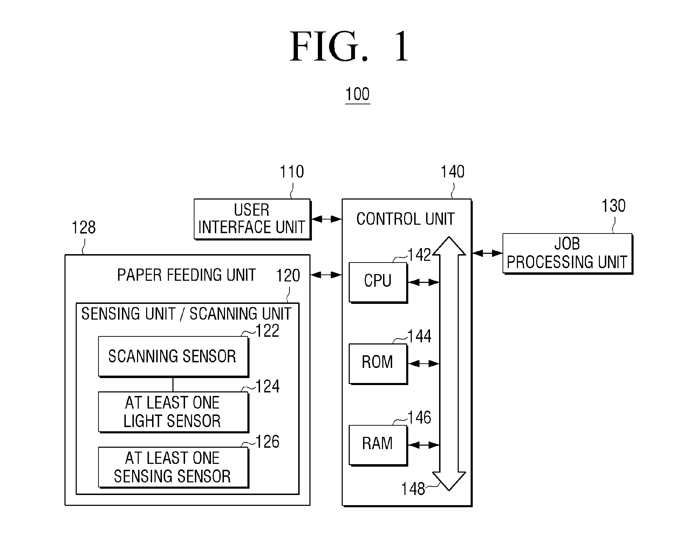

FIG. 1 is a block diagram illustrating an image forming apparatus according to an exemplary embodiment of the present general inventive concept.

With reference to FIG. 1, an image forming apparatus 100 includes a user interface unit (UI) 110, a sensing unit/scanning unit 120, a job processing unit 130, and a control unit 140. Herein, the image forming apparatus refers to an apparatus that prints print data generated in a terminal such as a computer, on recording paper. A copier, printer, facsimile, and multi function peripheral (MFP) that performs the functions of a copier, printer, and facsimile in one apparatus are examples of an image forming apparatus.

The user interface unit 110 has a function of enabling a user to set and/or select various functions that the image forming apparatus provides.

More specifically, through the user interface unit 110, a user may set a standard paper group to be applied. That is, the user interface unit 110 may display a UI window which may receive a setting of a standard paper group to be applied, and the user may set the standard paper group to be applied in the UI window. Herein, the UI window which may receive the setting of the standard paper group to be applied may be displayed on the user interface unit 110 when the power of the image forming apparatus 100 is turned on, when a memory of the image forming apparatus 100 has been cleared and initiated, and/or when the user makes a request to display the UI window to receive the setting of the standard paper group, during operating the image forming apparatus 100.

In addition, a user may receive a setting of a country where the image forming apparatus 100 is to be used through the user interface unit 110. That is, the user interface unit 110 may display a UI window which may receive the setting of the country where the image forming apparatus 100 is to be used, and the user may set the country on the UI window. When the country is set through the user interface unit 110, the control unit 140 to be explained below may apply the standard paper group used in that country as the standard paper group to be used in the image forming apparatus 100. Herein, the UI window which may receive the setting of the country may be displayed on the user interface unit 110 when the power of the image forming apparatus has been turned on, when memory of the image forming apparatus has been cleared and initiated, and/or when the user requests display of a UI window to receive the setting of the country during operations of the image forming apparatus 100.

Herein, the standard paper group may include the AB size paper group and Inch size paper group. In addition, the AB size paper group herein is a standard paper size, meaning a set of paper such as a statement, a letter, an Exe, a legal, and a ledger.

The Inch size paper group is typically a paper group used in the United States, the Philippines, Canada, Mexico, Columbia, Venezuela, and Chile, while the AB size paper group is typically a paper group used in all countries other than those using the Inch size paper group.

When one of the countries in the American continent is set as the country where the image forming apparatus is to be used through the user interface unit 110, the control unit 140 to be explained below may apply the Inch size paper group as the standard paper group.

When one of the countries other than those in the American continent is set as the country where the image forming apparatus is to be used through the user interface unit 110, the control unit 140 to be explained below may apply the AB size paper group as the standard paper group.

In addition, the user interface unit 110 may display a size of paper determined by the control unit 140 to be explained below.

Herein, the user interface unit 110 may be embodied as an apparatus such as a touchpad where an input and output are embodied at the same time, and/or may be embodied as a combination of an input apparatus such as a mouse and/or keyboard, and a display apparatus such as a CRT monitor, LCD monitor, and/or LED.

The sensing unit 120 has a function of sensing a size of the paper.

More specifically, the sensing unit 120 may sense the size of the paper when the paper is placed in the image forming apparatus 100 and after a cover is closed.

In addition, the sensing unit 120 may sense the size of the paper when the paper is placed in the image forming apparatus 100, after a job processing command (for example, a copy command, etc.) is input, and before the cover is closed.

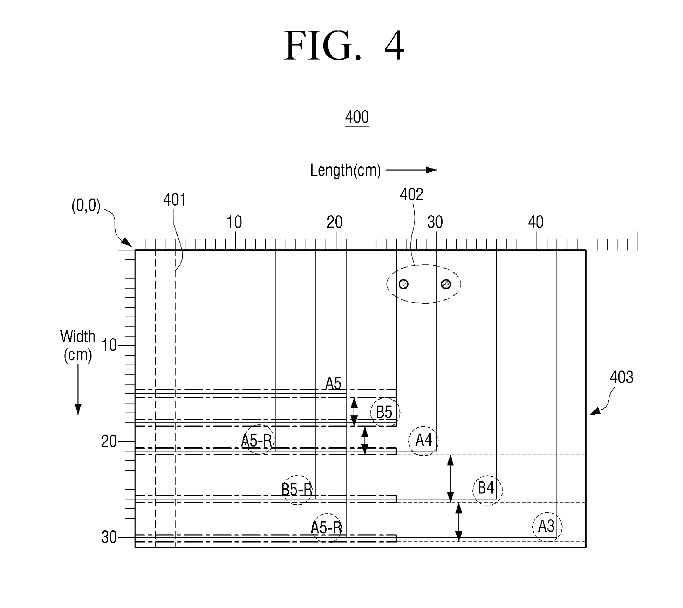

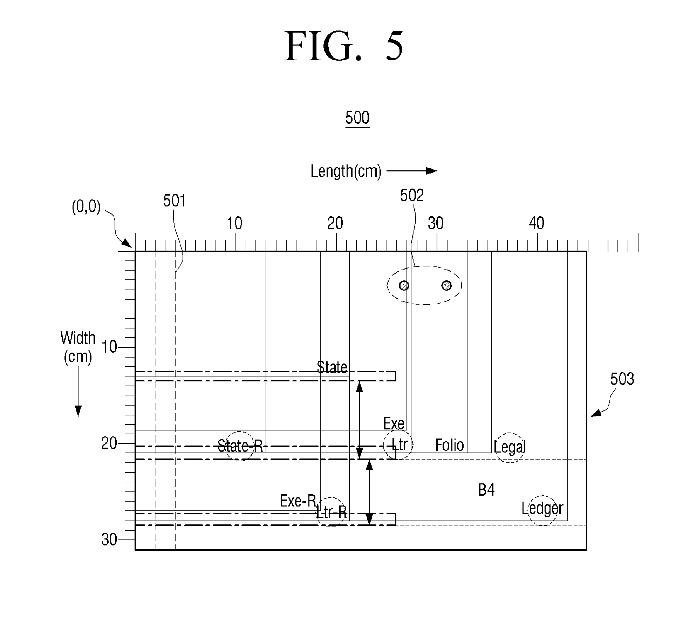

Herein, in the case where the image forming apparatus 100 is in a Flatbed method, the sensing unit 120 may be embodied, for example, as a scanning sensor 122 and at least one light sensor 124 provided in the sensing unit/scanning unit 120. That is, the sensing unit/scanning unit 120 may use the scanning sensor 122 to sense a width of the paper, and use at least one light sensor 124 to sense a length of the paper, thereby sensing the overall size of the paper. A more specific sensing method will be explained hereinafter with reference to FIGs. 4 and 5.

Herein, the scanning sensor may be embodied as a CIS (CMOS image sensor) and/or CCD (Charge Coupled Device), but is not limited thereto.

In addition, herein when the image forming apparatus 100 is in an ADF (Auto Document Feeder) method, the sensing unit/scanning unit 120 may be embodied as at least one sensing sensor 126 provided in a paper feeding unit 128 of the image forming apparatus 100. That is, the sensing unit/scanning unit 120 may sense the width of the paper using the at least one sensing sensor 126 provided in the paper feeding unit 128 in both directions of a front end where the paper is fed in, and may sense the length of the paper using the at least one sensing sensor 126 provided in the paper feeding unit 128 of a back end of the paper, thereby sensing the overall size of the paper.

The job processing unit 130 performs an image forming job such as print, scan, copy, fax by a control signal of the control unit 140 to be explained below.

More specifically, the job processing unit 130 may scan the paper, and perform printing on paper corresponding to the size of the paper determined by the control of the control unit 140 to be explained below.

The control unit 140 has a function of controlling the overall functions of the user interface unit 110, the sensing unit/scanning unit 120, and job processing unit 130.

More specifically, the control unit 140 may apply a standard to determine the size of the paper differently depending on the standard paper group to be applied. That is, when the AB size paper group is set as the standard paper group to be applied through the user interface unit 110, the control unit 140 may apply the AB size paper group as the standard to determine the size of the paper. In addition, when the Inch size paper group is set as the standard paper group to be applied through the user interface unit 110, the control unit 140 may apply the Inch size paper group as the standard to determine the size of the paper.

In addition, when the country where the image forming apparatus 100 is to be used is set as one of the United States, the Philippines, Canada, Mexico, Columbia, Venezuela, and Chile through the user interface unit 110, the control unit 140 may apply the Inch size paper group as the standard to determine the size of the paper.

In addition, when the country where the image forming apparatus 100 is to be used is set as one of the countries other than those in the American continent through the user interface unit 110, the AB size paper group may be applied as the standard to determine the size of the paper.

A user may increase a rate of sensing the size of paper by applying different standards to determine the size of the paper depending on the standard paper group to be applied as aforementioned. For example, the user may select at least one standard among a plurality of different standards, which may be used to determine the size of the paper.

In addition, when the size of the paper sensed in the sensing unit/scanning unit 120 is a standard paper size within the standard paper group set through the user interface unit 110, the control unit 140 may determine the size of the paper as the standard paper size.

For example, assuming that the standard paper group which has been set is the AB size paper group and the size of the paper placed in the image forming apparatus 100 is A4, when A4 size paper is placed in the image forming apparatus 100, the sensing unit/scanning unit 120 may sense that the size of the paper is A4. In this case, since A4 is a standard paper size within the AB size paper group set as the standard paper group, the control unit 140 may determine that the sensed size of the paper is the standard paper size.

In another example, assuming that the paper group which has been set is the Inch size paper group and the size of the paper placed in the image forming apparatus 100 is letter, when letter size paper is placed in the image forming apparatus 100, the sensing unit/scanning unit 120 may sense that the size of the paper is letter. In this case, since letter, which is the size of the paper, is a standard paper size within the Inch size paper group, the control unit 140 may determine that the sensed size of the paper is the standard paper size.

In addition, when the size of the paper sensed in the sensing unit/scanning unit 120 is a non-standard paper size within the standard paper group setting which was set through the user interface unit 110, the control unit 140 may determine that the size of the paper is within a predetermined variation of a size of a standard paper which is greater than the non-standard paper size. In one exemplary embodiment, when the size is within the predetermined variation, it may be determined the size of the paper is close to the size of the standard paper.

For example, when the standard paper group which has been set is the AB size paper group and the size of the paper placed in the image forming apparatus 100 is a non-standard paper size which is not included in the AB size paper group, the size of the paper may not satisfy the predetermined variation size of the standard paper group, i.e., the paper is greater than B5 (182mm*257mm) and smaller than A4 (210mm*297mm). In this exemplaray embodiment, when paper which is greater than B5 and less than than A4 is placed in the image forming apparatus 100, the sensing unit/scanning unit 120 may sense the size of the paper to have a width of 182mm ∼ 210mm and a length of 257mm - 297mm. Since the sensed size of the paper is a non-standard paper size and not a standard paper size within the AB size paper group which has been set as the standard paper group, the control unit 140 may determine that the sensed size of the paper is within a predetermined variation of the standard paper size which is greater than the non-standard paper size. That is, when the width of the paper is within the range of 182mm - 210mm, the control unit 140 may determine that the sensed size of the paper is A4, which is the within a predetermined variation of a size of the standard paper sizes including the sensed size of the paper.

For example, the standard paper group which has been set is the Inch size paper group, and the size of the paper placed in the image forming apparatus 100 is a non-standard paper size which is not included in the Inch size paper group which is greater than statement size (139.7mm*215.9mm) and less than the letter size (215.9mm*279mm). When paper which is greater than the statement size and less than the letter size is placed in the image forming apparatus 100, the sensing unit/scanning unit 120 may sense the size of the paper having the width of 139.7mm - 215.9mm and the length of 215.9mm - 279mm. In this case, since the sensed size of the paper is a non-standard paper size and not a standard paper size within the size paper group, the control unit 140 may determine that the size of the paper is the letter size, which is within a predetermined variation of the standard paper size greater than the non-standard paper size. That is, when the width of the paper is within 139.7mm ∼ 215.9mm, the control unit 140 may determine that the sensed size of the paper is the letter size, which is the size within a predetermined variation of the standard paper sizes including the sensed size of the paper.

That is, in conventional image forming apparatuses, only the standard paper sizes in the above Table 1 may be sensed, and when sensing a width of paper, only those within the +-4mm margin of error may be sensed. Otherwise, sensing the size of the paper resulted in a failure, and thus when a user frequently used paper having sizes of a non-standard paper, the sensing of paper always resulted in a failure, causing inconvenience to the user of having to further set the size of the paper. However, the image forming apparatus 100 according to an exemplary embodiment of the present general inventive concept finds the closest standard paper size in which the paper is not cut out, even when the user frequently uses non-standard size paper, and thus the user may not be required to further set the size of the paper.

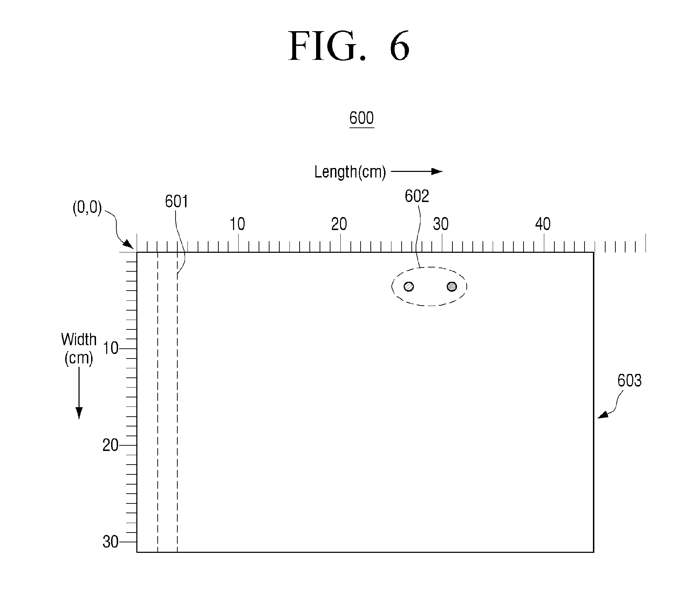

In addition, when a size of paper may not be sensed, the control unit 140 may determine that the size of the paper of which sensing may not be performed is a predetermined standard paper size. This will be explained in more detail with reference to FIG. 6.

In addition, the control unit 140 may control the user interface unit 110 to display a determined size of the paper.

As set forth above, since at least one exemplary embodiment always informs a user of the determined size of the sensed paper, the user is able to check whether the sensing has been done properly.

Herein, the control unit 140 may include a CPU 142, ROM 144 where a control program is stored, and RAM 146 which stores input data and/or is used as an operation related storage area. Herein, the CPU 142, ROM, 144 and RAM 146 may be mutually connected to one another through an internal BUS 148.

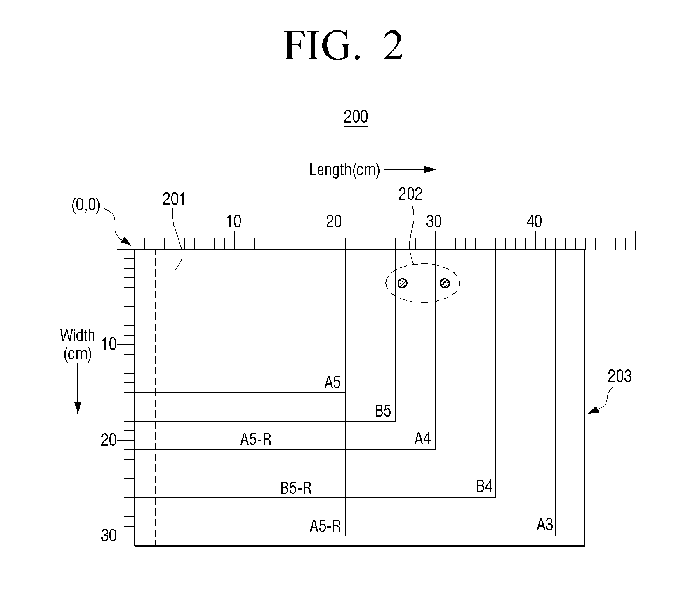

FIG.2 is a view illustrating placement areas for paper, for example, in a scanning unit 200, when the standard paper group is an AB size paper group. FIG. 2 is based on an exemplary embodiment in which the image forming apparatus 100 is in a Flatbed method, where the scanning unit 200 includes the scanning sensor 201 and light sensor 202.

In the scanning unit 200, paper may be placed based on a point having coordinate (0,0), i.e., the corner of the paper may be placed in the upper left hand corner (0,0) of the scanning unit 200 as shown in FIG. 2. With reference to FIG. 2, the paper placed in the scanning unit may be paper having sizes of A3, A4, A4-R, A5, A5-R, B4, B5, and B5-R. Herein, each paper may be placed in the areas of the scanning unit 200 for the paper sizes of A3, A4, A4-R, A5, A5-R, B4, B5, and B5-R as illustrated in FIG. 2 based on coordinate (0,0).

However, the present general inventive concept is not limited to the above, and the paper placed in a scanning area 203 of the scanning unit 200 may have sizes of A0 to A10 and B0 to B10 depending on the size of the scanning area 203, and further, the paper may be placed based on an arbitrary area instead of coordinate (0,0). In this case, the placement areas of paper may differ according to the size of paper.

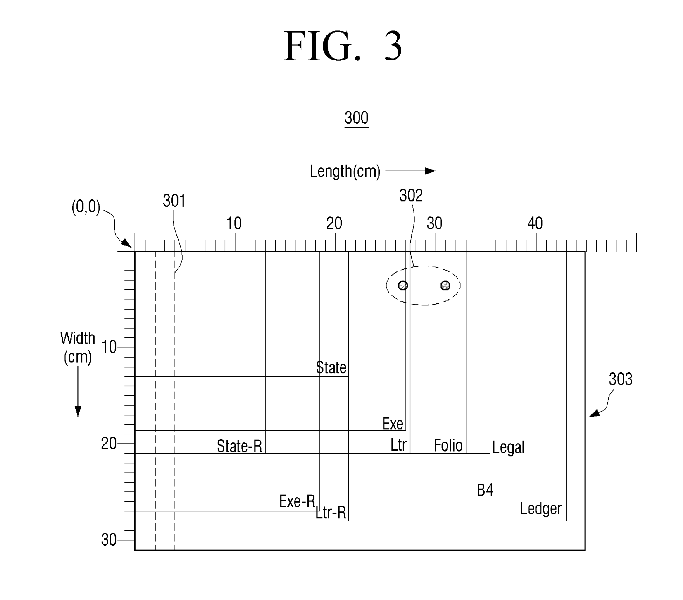

FIG. 3 is a view illustrating the placement areas of paper in the case where the standard paper group is the Inch size paper group. FIG. 3 is based on an exemplary embodiment providing the image forming apparatus 100 according to a Flatbed method, where the scanning unit 300 includes a scanning sensor 301, a light sensor 302, and a scanning area 303.

Paper may be placed in the scanning unit 300 based on coordinate (0,0). With reference to FIG. 3, the paper placed in the scanning unit 300 may have sizes of statement, statement-R, letter, letter-R, exe, exe-R, Folio, Legal, and Ledger. Herein, each paper may be placed in the areas of the scanning area 303 illustrated in FIG. 3 based on coordinate (0,0).

However, the present general inventive concept is not limited to the above, and paper of the Inch size paper group other than those illustrated in FIG. 3 may be placed in the scanning area 303 depending on the size of the scanning area 303, and further, the paper may be placed based on an arbitrary area instead of coordinate (0,0). In this exemplary embodiment, the placement areas of paper may differ according to the size of the paper.

FIG. 4 is a view that illustrates a method to determine a size of paper when the standard paper group is anAB size paper group. FIG. 4 is based on an exemplary embodiment which provides the image forming apparatus 100 according to a Flatbed method, where the scanning unit 400 includes a scanning sensor 401, a light sensor 402, and a scanning area 403.

The sensing unit/scanning unit 120 uses the scanning unit 400 to sense the width of the paper, and uses at least one light sensor 124 to sense the length of the paper, thereby sensing the overall size of the paper.

When the size of the paper placed in the scanning unit 400 with a top corner of the paper at the coordinate (0,0) is A4 and B5, if the size of the paper placed is A4, the sensing unit/scanning unit 120 uses the scanning sensor 401 to sense that the width of the paper is 210 mm. In addition, when a light side light sensor of the two light sensors 402 senses the light reflected by the paper, the sensing unit/scanning unit 120 senses that the size of the paper placed in the scanning area 403 is A4 based on the width of the sensed paper.

When the size of the paper placed with a top corner of the paper at the coordinate (0,0) of scanner area 403 is B5, the sensing unit/scanning unit 120 uses the scanning sensor 401 to sense that the width of the paper is 182 mm. In addition, when both light sensors 402 fail to sense the light reflected by the paper, the sensing unit/scanning unit 120 senses that the size of the paper placed in the scanning area 403 is B5 based on the width of the sensed paper.

In this exemplary embodiment, the size of the paper sensed in the sensing unit/scanning unit 120 is a size within the standard paper size set through the user interface unit 110. Thus, the control unit 140 may determine that the size of the paper is the standard paper size.

However, although there is no problem when the size of the paper placed in the scanning area 403 based on coordinate (0,0) is a standard paper size within the AB standard paper group such as A4 and B5, when the placed paper has a non-standard paper size, a conventional image forming apparatus would process it as a sensing failure, causing inconvenience to the user by requiring the user to change the setting of the size of the paper.

For example, according to a conventional image-forming apparatus, the set standard paper group may be the AB size paper group and the size of the paper placed in the scanning unit 400 is a non-standard paper size which is not included in the AB size paper group that is greater than B5 (182mm*257mm) and less than A4 (210mm*297mm). In this exemplary embodiment, when paper which is greater than B5 and less than A4 is placed in the (0,0) corner of the scanning area 403 in the image forming apparatus 100, e.g., on the (0,0) corner of a glass window of a Flatbed scanner, the sensing unit/scanning unit 120 may sense the size of the paper. Since the sensed size of the paper is a non-standard paper size and not a standard paper size within the AB size paper group, the control unit 140 may determine that the size of the paper is A4, which is the size within a predetermined variation of the standard paper size which is greater than the non-standard paper size.

By doing this, the present general inventive concept enables finding the standard paper size within a predetermined variation of a non-standard paper size for printing an entire sensed paper size , even when the user frequently uses paper of non-standard paper sizes. Accordingly, a user's inconvenience of having to further set the size of the paper may be resolved.

Fig. 5 is a view that illustrates a method to determine a size of paper when the standard paper group is an Inch size paper group. FIG. 5 is based on an exemplary embodiment that provides an image forming apparatus 100 according to a Flatbed method, where the scanning unit 500 includes a scanning sensor 501, a light sensor 502, and a scanning area 503.

For example, the set standard paper group may be the Inch size paper group and the size of the paper placed in the image forming apparatus 100 is a non-standard paper size not included in the Inch size paper group that is greater than the statement size (139.7mm*215.9mm) and less than the letter size(215.9mm*279mm). In this exemplary embodiment, when paper which is greater than the statement size and less than the letter size is placed in the image forming apparatus 100, the sensing unit/scanning unit 120 may sense the size of the paper. Since the sensed size of the paper is a non-standard paper size and not a standard paper size within the Inch size paper group, the control unit 140 may determine that the sensed size of the paper is the letter size, which is within a predetermined variation of the standard paper size greater than the non-standard paper size.

By doing this, the present general inventive concept enables the user to find the standard paper size within a predetermined variation where paper is not cut out, even when the user frequently uses paper of a non-standard paper size. Accordingly, aninconvenience of having to further set the size of the papermay be resolved.

The present general inventive concept is not limited to this, and rather, the present general inventive concept may also provide a feature of sensing all sizes of paper including, for example, by changing the position and/or number of the light sensor 502, and/or changing the setting of the determination area.

FIG. 6 is a view illustrating an example when the size of the paper may not be sensed. FIG. 6 illustrates an exemplary embodiment providing the image forming apparatus 100 according to a Flatbed method, where the scanning unit 600 includes a scanning sensor 601 and light sensor 602.

When the paper is placed in an outer area (area with deviant crease lines in FIG. 6) of the scanning sensor 601 and light sensor 602, the size of the paper may not be sensed. In this example, the control unit 140 may determine that the size of the paper that may not be sensed is a predetermined standard paper size. That is, when the paper is placed in the area with deviant crease lines in FIG. 6 and the predetermined standard paper size is A4, the control unit 140 may determine that the size of the paper that may not be sensed is A4 and may display the determined size A4 on the user interface unit 110.

As set forth above, according to FIGs. 3 to 6, there are two light sensors, but the present general inventive concept is not limited to this exemplary embodiment, and the number of the light sensor may differ according to the detection method of the length of the paper.

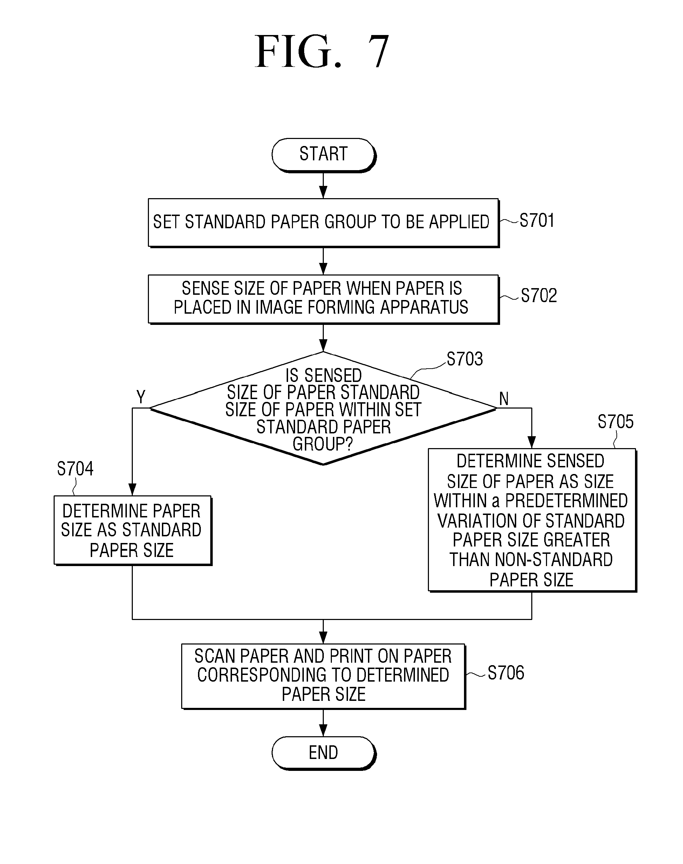

FIG. 7 is a flowchart illustrating the image forming method according to an exemplary embodiment of the present general inventive concept. With reference to FIG. 7, a setting of a standard paper group to be applied is performed (S701). When paper is placed in the image forming apparatus, the size of the paper is sensed (S702). Then, it is determined whether the sensed size of the paper is within the standard paper size in the set standard paper group (S703). When the sensed size of the paper is a standard paper size within the set standard paper group (S703:Y), it is determined that the size of the paper is the standard paper size (S704). When the sensed size of the paper is a non-standard paper size within the set standard group (S703:N), it is determined that the size of the paper is the size within a predetermined variation of a standard paper size greater than the non-standard paper size (S705). Then, the paper is scanned and printed on paper corresponding to the determined size of the paper (S706).

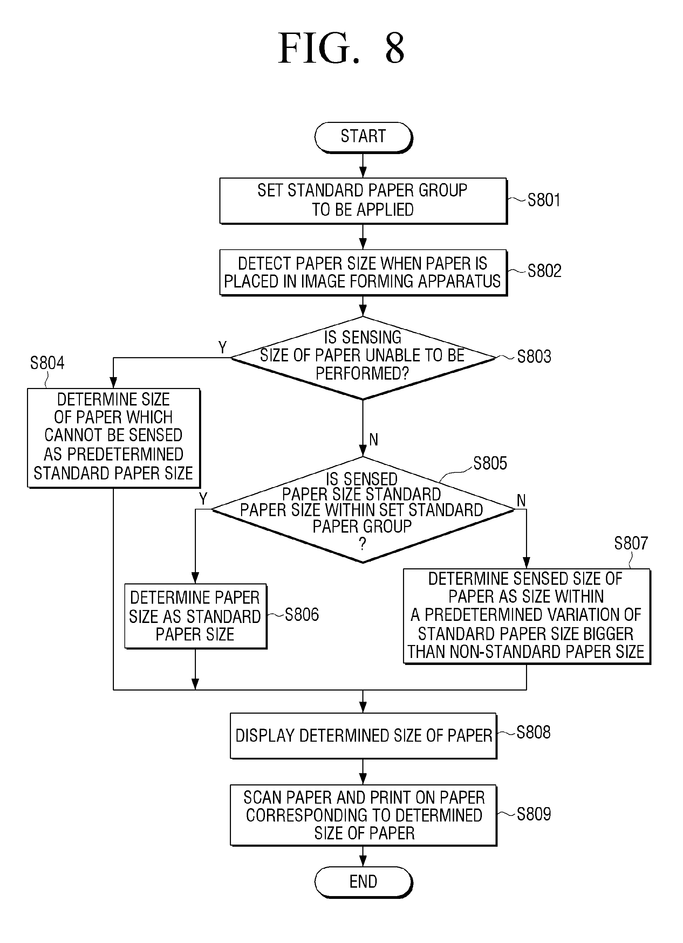

FIG. 8 is a flowchart illustrating the image forming method according to FIG. 7 in more detail. With reference to FIG. 8, a setting of a standard paper group to be applied is performed (S801). Herein, the standard paper group includes the AB size paper group and the Inch size paper group.

However, the present general inventive concept is not limited to the above, and a country where the image forming apparatus is to be used may be set instead of a standard paper group. In this exemplary embodiment, when the country where the image forming apparatus is to be used is set, the standard paper group used in the set country may be applied as the standard paper group to be used in the image forming apparatus 100.

In addition, when paper is placed in the image forming apparatus, the size of the paper is sensed (S802). Then it is determined whether sensing the size of the paper (S803) may be performed. When sensing the size of the paper (S803:Y) may not be performed, it is determined that the size of the paper which may not be sensed is a predetermined standard paper size (S804). When sensing the size of the paper (S803:N) may be performed, it is determined whether the sensed size of the paper is a standard paper size within the set standard paper group (S805). When the sensed size of the paper is the standard paper size within the set standard paper group (S805:Y), it is determined that the size of the paper is the standard paper size (S806). When the sensed size of the paper is a non-standard paper size within the set standard paper group (S805:N), it is determined that the sensed size of the paper is a size within a predetermined variation of the standard paper size greater than the non-standard paper size (S807). Then the determined size of the paper is displayed (S808). The paper is then scanned and printed on paper corresponding to the determined size of the paper (S809).

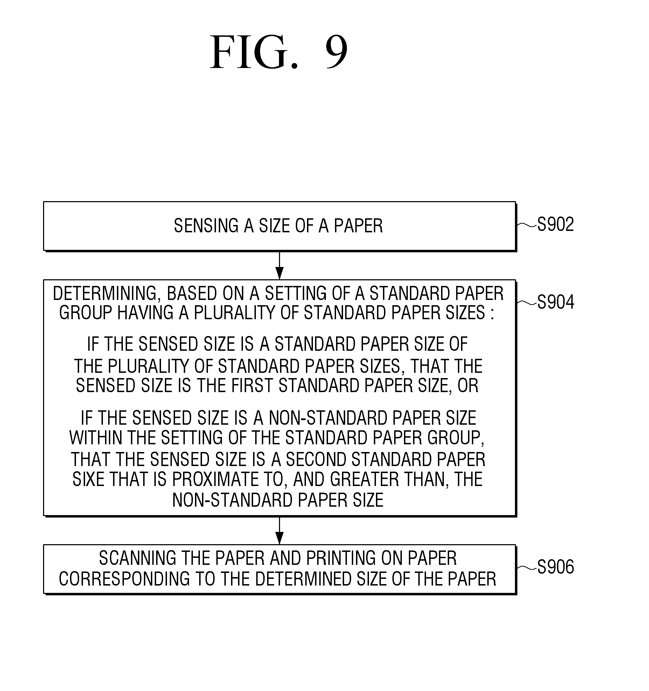

FIG. 9 illustrates an image forming apparatus that may include an image forming method of an image forming apparatus, the method including sensing a size of a paper (S902), determining (S904), based on a setting of a standard paper group having a plurality of standard paper sizes if the sensed size is a first standard paper size of the plurality of standard paper sizes, that the sensed size is the first standard paper size, or if the sensed size is a non-standard paper size within the setting of the standard paper group, that the sensed size is a second standard paper size that is proximate to, and greater than, the non-standard paper size, and scanning the paper and printing on paper corresponding to the determined size of the paper (S906).

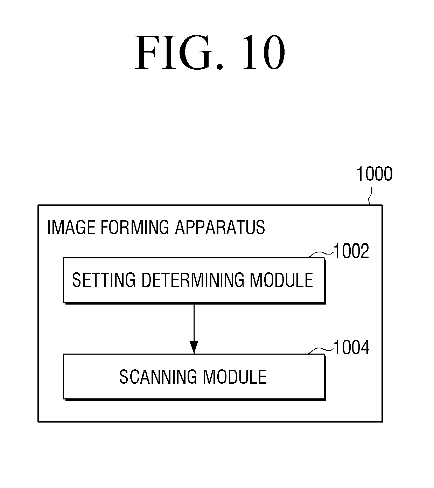

FIG.10 illustrates an exemplary embodiment of an image forming apparatus 1000 that may include a setting determining module 1002 to sense a size of a paper and to set one of a first standard paper size if the sensed size is a standard paper size within a predetermined variation of a plurality of standard paper sizes, and a second standard paper size if the sensed size is a nonstandard size proximate to, and greater than, the predetermined variation of the first standard paper size, but less than the second standard paper size. The image forming apparatus further includes a scanning module 1004 in electrical communication with the setting determining module to scan the paper and print on paper corresponding to the first standard paper size or the second standard paper size set by the setting determining unit. The first and second standard paper size set by the setting determining module may be determined by one of a standard paper size determined by a sensed width of the paper, a standard paper size determined by a sensed length of the paper, and a greater of a third standard paper size and a fourth standard paper size when a length of a sensed nonstandard size paper provides the third standard size paper and a width of the nonstandard size paper provides the fourth standard size paper. Accordingly, an image forming apparatus according to at least one exemplary embodiment enables finding the standard paper size within a predetermined variation of a non-standard paper size for printing an entire sensed paper size , even when the user frequently uses paper of non-standard paper sizes.

In addition, an image forming apparatus according to various exemplary embodiments of the present general inventive concept as set forth above may be embodied by a program code which is executed by a CPU, etc., and stored in various types of recording media.

More specifically, the code to execute the aforementioned methods may be stored in various types of recording media which may be read in a terminal such as RAM (Random Access Memory), Flashmemory, ROM (Read Only Memory), EPROM (Erasable Programmable ROM), EEPROM (Electronically Erasable and Programmable ROM), Register, Removable Disk, Memory Card, USB Memory, and CD-ROM.

Accordingly, a program may be installed so that the image forming apparatus set forth above may be executed in an apparatus where such recording media is connected and/or mounted.

Meanwhile, according to various exemplary embodiments of the present general inventive concept, the determination standards may be applied differently according to the standard paper group to be applied, thereby increasing the rate of sensing the size of paper.

In addition, the present general inventive concept enables the user to find a standard paper size within a predetermined variation of the sensed size, even when the user frequently uses non-standard paper size paper, thereby resolving an inconvenience of having to further set the size of the paper.

In addition, the present general inventive concept informs the user of the determined size of the paper when paper is sensed, thereby enabling the user to check whether sensing has been made properly.

Although a few embodiments of the present general inventive concept have been shown and described, it will be appreciated by those skilled in the art that changes may be made in these exemplary embodiments without departing from the principles of the general inventive concept, the scope of which is defined in the appended claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An image forming method of an image forming apparatus, the method comprising:
receiving a setting of a standard paper group to be applied to a scanning unit of the image forming apparatus;
sensing a size of paper, when the paper is placed in the image forming apparatus;
determining that the size of the paper is a standard paper size when the sensed size of the paper is a standard paper size within the received setting of the standard paper group, and determining that the sensed size of the paper is a size within a predetermined variation of the standard paper size that is greater than a non-standard paper size when the sensed size of the paper is the non-standard paper size within the received setting of the standard paper group; and
scanning the paper and printing on paper corresponding to the determined size of the paper.

2. The method according to claim 1, wherein the standard paper group includes an AB size paper group and Inch size paper group.

3. The method according to claim 1 or claim 2, further comprising:
displaying the determined size of the paper.

4. The method according to any one of claims 1 to 3, wherein the sensing the size of the paper includes using a scanning sensor and at least one light sensor provided in a scanning unit of the image forming apparatus to sense the size of the paper, when the image forming apparatus is using a Flatbed method.

5. The method according to any one of claims 1 to 3, wherein the sensing the size of the paper uses at least one sensing sensor provided in a paper feeding unit of the image forming apparatus to sense the size of the paper, when the image forming apparatus is using an ADF (Auto Document Feeder) method.

6. The method according to any one of claims 1 to 5, wherein the sensing the size of the paper senses the size of the paper when the paper is placed in the image forming apparatus and after a cover is closed or when the paper is placed in the image forming apparatus and after a job processing command is input and before the cover is closed.

7. The method according to any one of claims 1 to 6, wherein the determining the size of the paper includes determining that the size of paper not sensed is a predetermined standard paper size, when sensing the size of the paper cannot be performed.

8. The image forming apparatus, comprising:
a user interface unit which receives a setting of a standard paper group to be applied to a sensing unit/scanning unit of the image forming apparatus;
the sensing unit/scanning unit which senses a size of the paper, when the paper is placed in the image forming apparatus;
a control unit which determines that the size of the paper is a standard paper size when the sensed size of the paper is the standard paper size within the received setting of the standard paper group, and determines that the size of the paper is a size within a predetermined variation of the standard paper size that is greater than a non-standard paper size when the sensed paper size is the non-standard paper size within the received setting of the standard paper group; and
a job processing unit which scans the paper and prints on paper corresponding to the determined size of the paper.

9. The apparatus according to claim 8, wherein the standard paper group includes an AB size paper group and Inch size paper group.

10. The apparatus according to claim 8 or claim 9, wherein the control unit controls the user interface unit to display the determined size of the paper.

11. The apparatus according to any one of claims 8 to 10, wherein the sensing unit/scanning unit comprises a scanning sensor and at least one light sensor to sense the size of the paper, when the image forming apparatus is using a Flatbed method.

12. The apparatus according to any one of claims 8 to 10, wherein the sensing unit/scanning unit comprises at least one sensing sensor provided in a paper feeding unit of the image forming apparatus to sense the size of the paper, when the image forming apparatus is using an ADF (Auto Document Feeder) method.

13. The apparatus according to any one of claims 8 to 12, wherein the sensing unit senses the size of the paper when the paper is placed in the image forming apparatus and after a cover is closed or when the paper is placed in the image forming apparatus and after a job processing command is input and before the cover is closed.

14. The apparatus according to any one of claims 8 to 13, wherein the control unit determines that the size of paper which cannot be sensed is a predetermined standard paper size, when sensing the size of the paper cannot be performed.

15. A recording medium where a program code for performing an image forming method in an image forming apparatus is stored, the method comprising:
receiving a setting of a standard paper group to be applied;
sensing a size of paper, when the paper is placed in the image forming apparatus;
determining that the size of the paper is a standard paper size when the sensed size of the paper is the standard paper size within the setting of the standard paper group, and determining that the sensed size of the paper is a size within a predetermined variation of the standard paper size that is greater than a non-standard paper size when the sensed size of the paper is the non-standard paper size within the set standard paper group; and
scanning the paper and printing on paper corresponding to the determined size of the paper.
